# EUROPÄISCHE PATENTSCHRIFT

(11) **EP 1 380 462 B1**
(45) Veröffentlichungstag und Bekanntmachung des Hinweises auf die Patenterteilung: **23.11.2011**
(21) Anmeldenummer: 03015158.3
(22) Anmeldetag: 04.07.2003
(51) Int. Cl.: B60K 15/067

(54) **Befestigungsvorrichtung für Behälter**
Fastening device for container
Dispositif d'attache pour un conteneur

(30) Priorität: 08.07.2002 DE 10230635
(43) Veröffentlichungstag der Anmeldung: 14.01.2004
(73) Patentinhaber: GM Global Technology Operations LLC, Detroit, MI 48265-3000 (US)
(72) Erfinder: Hürter, Helmut, 64572 Büttelborn (DE)
(74) Vertreter: Strauss, Peter

(56) Entgegenhaltungen:
- EP-B1- 0 912 359
- DE-U1- 20 011 592
- US-A- 2 902 240
- US-A- 6 059 252
- US-B2- 6 402 198

## Beschreibung

Die vorliegende Erfindung betrifft eine Befestigungsvorrichtung für Behälter, wie beispielsweise Hochdruckbehälter, Kraftstofftanks, Gasflaschen oder dergleichen, am Unterbau der Karosserie eines Kraftfahrzeuges, nach dem Oberbegriff des Anspruchs 1.

Aus der DE 299 12 337 U1 ist ein System für die Befestigung von Behältern an einem Fahrzeug bekannt geworden, mit zumindest einem Tragelement, das an einer Aufnahmefläche eines Rahmens oder eines sonstigen Karosseriebauteils des Fahrzeugs befestigbar ist und eine Tragfläche aufweist, auf welcher der Behälter mit seiner Unterseite aufsetzbar ist. Auskünfte zum Behälterinhalt sind dieser Druckschrift nicht zu entnehmen.

Weiterhin sind unterschiedlich ausgestaltete Vorrichtungen zur lösbaren Halterung von rohrförmigen Körpern, wie Gasflaschen, Rohre, rohrförmige Behälter oder dergleichen bekannt geworden.

So offenbart beispielsweise die DE 199 12 671 C1 eine solche Vorrichtung zur lösbaren Halterung von rohrförmigen Körpern auf oder an den Ladeflächen von Kraftfahrzeugen. Mit dieser Vorrichtung sollen rohrförmige Körper werkzeuglos sicher und unverrückbar auf oder an den Ladeflächen von Kraftfahrzeugen rasch gehaltert und ebenso rasch bei Bedarf wieder gelöst werden können. Die DE 199 36 653 A1 vom selben Anmelder offenbart eine weitere Variante einer Vorrichtung zur lösbaren Halterung von rohrförmigen Körpern, wie Gasflaschen, Rohre, rohrförmige Behälter oder dergleichen. Diese Variante soll als Weiterentwicklung zur vorgenannten Variante eine Umschlagsicherung als auch eine Verdrehsicherung aufweisen.

Eine weitere Ausführungsform einer lösbaren Gasflaschenhalterung ist aus der DE 93 01 537.2 U1 bekannt geworden. Dort ist eine lösbare Befestigung für Gasflaschen mit einem Flaschengurt als Spannverschluss zur Halterung von Gasflaschen beispielsweise in Wohnmobilen, Wohnanhängern oder dergleichen offenbart. Damit soll ein Verdrehen der im Wohnmobil oder Wohnwagen deponierten Gasflasche während der Fahrt vermieden werden.

Ferner ist aus der EP 0 113 299 B1 eine Vorrichtung bekannt geworden, zur Befestigung von einer Mehrzahl von zylindrischen Behältern, wie beispielsweise Gasflaschen, in einem Transportgestell mit einer Grundplatte und mit dieser verbundenen seitlichen Streben, die entlang der Grundplatte verteilt sind, wobei die Vorrichtung Bänder, insbesondere aus Flacheisen aufweist, die auf der obersten Schicht der Behälter über die Breite des Stapels zwischen zwei Streben angeordnet sind und die Form der Behälter der obersten Schicht einnehmen, wobei die Vorrichtung Spannorgane zum Festspannen des gesamten aus mehreren Gasflaschen bestehenden Flaschenpaketes aufweist. Diese Vorrichtung dient zum Transport einer Vielzahl gleicher Gasflaschen beispielsweise auf einem Anhänger oder einem Lastkraftwagen.

Diese vorgenannten lösbaren Vorrichtungen haben lediglich die zeitweilige Halterung von rohrförmigen Behältern, wie beispielsweise Gasflaschen, für deren Transport von einem Ort zum anderen Ort zum Zweck. Die damit transportierten Behälter bleiben während des Transports verschlossen und weisen beispielsweise im Falle von Gasflaschen häufig Schutzkappen auf, die über das Anschlussfitting geschraubt sind, damit dieses vor äußeren Einwirkungen aller Art geschützt ist. Während des Transports erfolgt keine Nutzung des im transportierten Behälter bevorrateten Inhalts.

Aus der Praxis ist es beispielsweise bei mit Erdgas (CNG) betriebenen Kraftfahrzeugen bekannt geworden, die erforderlichen Kraftstoffbehälter am Unterbau der Karosserie zu befestigen, statt diese beispielsweise im Kofferraum unterzubringen, um den dort nutzbaren Innenraum nicht unnötig zu verkleinern. Derlei Kraftstoffbehälter beispielsweise für Erdgas sind wegen des hohen Überdrucks von beispielsweise 200 bar meistens in Form von zylindrischen Flaschen ausgestaltet. Zur Befestigung solcher Kraftstoffbehälter am Unterbau der Karosserie werden in der Praxis zwei quer zur Fahrzeuglängsachse voneinander beanstandete Behälterhalter vorzugsweise mit L-förmigem Querschnitt, wie beispielsweise L-förmige Montagewinkel, verwendet. Dazwischen wird der Kraftstoffbehälter, wie beispielsweise eine Gasflasche, mit zwei Spannbändern befestigt, wobei die Längsachse des Behälters quer zur Fahrzeuglängsachse bzw. parallel zu den Behälterhaltern orientiert ist. Die Spannbänder umfassen den dem Unterbau der Karosserie abgewandten Umfang des Kraftstoffbehälters und sind mit waagrecht bzw. parallel zum Fahrzeugboden oder Unterbau orientierten Befestigungsschrauben an den L-förmigen Behälterhaltern angeschraubt. Mit einer solchen aus der Praxis bekannten Befestigungsvorrichtung sind jedoch noch keine Spannkräfte auf das Spannband aufbringbar. Dementsprechend ist in der Praxis ein handelsübliches Spannschloss vorgesehen worden, dessen eine Seite mit einem Ende des Spannbandes verbunden ist und dessen andere Seite mittels der Befestigungsschrauben am L-förmigen Behälterhalter angeschraubt ist.

Diese Art der Befestigung von Gasflaschen oder dergleichen am Unterbau der Karosserie eines Kraftfahrzeuges hat jedoch den wesentlichen Nachteil, dass die Befestigungsschrauben, mit denen auf der einen Seite der Gasflasche das eine Ende des Spannbandes am L-förmigen Behälterhalter angeschraubt ist und mit denen auf der anderen Seite der Gasflasche das dem L-förmigen Behälterhalter benachbarte Ende des Spannschlosses angeschraubt ist, beim Erzeugen einer Spannkraft mit der Spannschraube des Spannschlosses nicht - wie bei Schrauben üblich - auf Zug belastet werden, sondern mit Quer- bzw. Scherkräften beaufschlagt werden. Dementsprechend weisen diese bekannten Befestigungsvorrichtungen nur geringe Belastungsreserven auf. Demzufolge besteht die Gefahr, dass bei einem Unfall oder bereits bei einem besonders scharfen Bremsvorgang oder Lastwechsel des Kraftfahrzeuges schon so hohe Kräfte aufgrund der Trägheit der Gasflasche auf die Befestigungsvorrichtung einwirken, dass die Befestigungsschrauben wegen der darin resultierenden hohen Quer- bzw. Scherkräfte abreißen und damit die Gasflasche sich losreißen kann.

Auch im normalen Betrieb eines Kraftfahrzeuges ist diese aus der Praxis bekannte Befestigungsvorrichtung für Gasflaschen am Unterbau der Karosserie eines Kraftfahrzeuges mit Mängeln behaftet. So haben Fahrzeugerprobungen gezeigt, dass die mit dieser bekannten Befestigungsvorrichtung montierten Gasflaschen aufgrund der beim Fahren unvermeidlichen Erschütterungen dazu neigen, sich um ihre Längsachse zu verdrehen. Dies führt in der Folge zu Dichtungsproblemen im Anschlussbereich der Gasflasche. Ferner treten unerwünschte Pendel- oder Schwenkbewegungen der Gasflasche in Fahrzeuglängsrichtung auf, selbst wenn die L-förmigen Behälterhalter möglichst dicht an den Durchmesser der Gasflasche platziert werden. Diese Quer- bzw. Rollbewegungen der Gasflasche treten häufig unter elastischer Verformung der Befestigungsvorrichtung sowohl beim Beschleunigen als auch beim Verzögern des Kraftfahrzeuges auf und können auf die Dauer zu einer Ermüdung der Befestigungsschrauben führen, die dann brechen, was schlussendlich zu den bereits vorstehend diskutierten gefährlichen Folgen, wie Gasaustritt führt.

Aus der EP0912-359 B1 ist eine Befestigungsvorrichtung nach dem Oberbegriff des Anspruchs 1 bekannt, in der ein Behälter mittels zweier Spannbänder in zwei Behälterhaltern, an denen die Spannbänder befestigt sind, gehaltert ist. Die zwei Behälterhalter sind halbschalenförmig ausgebildet und weisen eine zur Außenkontur des Behälters komplementäre Auflagefläche auf, in der der Behälter formschlüssig ruht. Aus der US 2,902,240 und der DE 200 11 592 U1 sind ähnliche Lösungen bekannt, wobei die DE 200 11 592 U1 den bekannten Stand der Technik, wie er in der WO 98/02324 gezeigt ist, ausdrücklich kritisiert.

Aufgabe der vorliegenden Erfindung ist es demzufolge derlei aus der Praxis bekannte Befestigungsvorrichtungen für Behälter, wie beispielsweise Hochdruckbehälter, Kraftstofftanks, Gasflaschen, oder dergleichen, derart weiterzuentwickeln, dass ein Kraftstofftank unter Vermeidung der vorgenannten Nachteile sicher gegen Verdrehen, Verrutschen oder gar Losreißen dauerhaft am Unterbau der Karosserie eines Kraftfahrzeuges befestigt werden kann.

Diese Aufgabe wird gelöst durch die Merkmale des Anspruchs 1.

Hierzu wird erfindungsgemäß eine Befestigungsvorrichtung für Behälter, wie beispielsweise Hochdruckbehälter, Kraftstofftanks, Gasflaschen, oder dergleichen, vorgeschlagen, die am Unterbau der Karosserie eines Kraftfahrzeuges mit Hilfe dieser Befestigungsvorrichtung zu fixieren sind, wobei diese Befestigungsvorrichtung wenigstens zwei den Behälter zumindest teilweise umfassende Spannbänder aufweist und zwei Behälterhalter, an denen die Spannbänder befestigt sind. Die Längsachse des Behälters ist vorzugsweise quer zur Fahrzeuglängsachse orientiert, wobei die Behälterhalter sich beiderseits des Behälters parallel zu dessen Längsachse erstrecken, und wobei der Behälter zwischen den Behälterhaltern angeordnet ist. Dabei wird erstmals vorgeschlagen, dass wenigstens einer der beiden Behälterhalter im Querschnitt V-förmig ausgebildet ist mit vom Unterbau wegweisender Spitze, so dass wenigstens ein Befestigungspunkt des dem Behälter zugewandten Schenkels des V-förmigen Behälterhalters am Unterboden innerhalb der senkrecht zum Unterbau projizierten Behälterkontur liegt, wobei Spannband und Behälterhalter sich weitestgehend an den Behälterquerschnitt anschmiegen und dabei den Behälterquerschnitt soweit als möglich umfassen.

Damit wird erstmals in vorteilhafter Weise eine optimale Umfassung des am Unterbau eines Kraftfahrzeuges zu befestigenden Behälters erzielt. Auf diese Weise sind die aus der Praxis nachteilig empfundenen Drehbewegungen des Behälters um seine Längsachse bei Erschütterungen, die im üblichen Fahrzeugbetrieb zwangsläufig auftreten, ausgeschlossen. Ferner ist damit vermieden, dass der Behälter bei Beschleunigungen oder Verzögerungen des Fahrzeugs ungewollte Pendelbewegungen oder Schwenkbewegungen beispielsweise um die gemeinsame Berührungslinie seiner Außenkontur mit dem Unterbau ausführen kann. Insbesondere ist durch die V-förmige Gestaltung des Behälterhalterquerschnitts sichergestellt, dass sich der Behälter möglichst flächig gegen die jeweils links und rechts des Behälters ihm zugewandten Schultern bzw. Schenkel des jeweilig benachbarten V-förmigen Behälterhalters abstützen kann, so dass der am Unterbau zu fixierende Behälter im Prinzip wie in einer auf seine Kontur angepassten Wanne oder Schale ruht, aus der dieser sich selbst bei schlagartigen Beschleunigungen oder Verzögerungen, wie sie beispielsweise bei einem Frontalzusammenstoss oder einem Heckaufprall auftreten können, nicht herausbewegen kann.

Der V-förmige Behälterhalter ist bei gleichen Wandstärken vorteilhaft verwindungssteifer und damit stabiler als herkömmliche, beispielsweise L-förmige, Behälterhalter. Dabei nimmt der V-förmige Behälterhalter beispielsweise auch jene Kräfte, die bei einem scharfen Beschleunigen oder Verzögern des Fahrzeuges aufgrund der Trägheit des Behälters in horizontaler Richtung auftreten können, problemlos vollständig auf. Derlei Kräfte werden über die jeweils zugewandten Schenkel des V-förmigen Behälterhalters aufgenommen und von diesen einerseits - je nach dem ob eine Schub- oder Zugkraft auf den dem Behälter zugewandten Schenkel einwirkt - entsprechend als Zugoder Schubkraft in den Unterbau weitergeleitet als auch andererseits entsprechend als Schub- oder Zugkraft über den äußeren Schenkel in den Unterbau abgeleitet. Die an den beiden Behälterhaltern befestigten Spannbänder stellen dabei in vorteilhafter Weise sicher, dass der zwischen den V-förmigen Behälterhaltern eingeschmiegte Behälter sich nicht über die jeweils betroffene Flanke über den V-förmigen Behälterhalter abrollen und damit aus der aus den beiden Behälterhaltern und dem Unterbau gebildeten Wanne bzw. Schale herausbewegen kann.

Damit ist die aus der Praxis bekannte Gefahr des Losreißens des Behälters, insbesondere eines Kraftstofftanks oder einer Gasflasche oder dergleichen ausgeschlossen und es kann nicht mehr zu den entsprechenden Folgeschäden kommen.

Darüber hinaus bietet die erfindungsgemäße Befestigungsvorrichtung erstmalig in vorteilhafter Weise eine wirtschaftlich herzustellende, kostengünstige Lösung der vorstehend aus der Praxis bekannten Probleme, die darüber hinaus auch in einer Serienproduktion realisierbar ist. Hierzu können die beiden V-förmigen Behälterhalter in an sich bekannter Weise zu deren Montage gegen den Unterboden verschraubt, verschweißt, gepunktet oder gekrimpt werden. Die Befestigung der Behälterhalter am Unterboden ist lediglich so auszulegen, dass die maximal auftretenden Kräfte damit abgefangen und in den Unterboden eingeleitet werden können.

Vorteilhafte Weiterbildungen der Erfindung ergeben sich aus den Merkmalen der Unteransprüche.

So ist in einer bevorzugten Ausführungsform der erfindungsgemäßen Befestigungsvorrichtung vorgesehen, dass das Spannband vermittels eines Spannschlosses derart am Behälterhalter befestigt ist, dass die im Spannband herrschenden Zugkräfte über eine Spannschraube wiederum als Zugkräfte und weitestgehend ohne Scherkräfte in den Behälterhalter einleitbar sind. Damit werden die bei aus der Praxis bekannten Befestigungsvorrichtungen nachteiligen Scherkräfte in den dort verwendeten Befestigungsschrauben vermieden. Diese Scherkräfte führten im Stand der Technik nachteilig relativ rasch zu einer Überlastung der Befestigungsschrauben und zu deren Bruch. Infolgedessen konnten sich die gemäß dem aus der Praxis bekannten Stand der Technik befestigten Behälter bereits bei ungünstigen Beschleunigungsverhältnissen aufgrund des Berstens der Befestigungsschrauben losreißen, wobei derlei ungünstige Beschleunigungsverhältnisse noch weit unter denjenigen Verzögerungs- oder Beschleunigungswerten lagen, die bei einem Unfall auftreten können.

Darüber hinaus bietet die Verwendung eines Spannschlosses die Möglichkeit, exakt die vorausbestimmte Spannkraft auf das Spannband aufzuprägen, so dass der ein mit einer erfindungsgemäßen Befestigungsvorrichtung am Unterbau befestigter Behälter optimal fixiert und dauerhaft gegen ein unerwünschtes Verdrehen, Pendeln, oder sich aus seiner Lage Herausbewegen gesichert ist.

Zudem kann in vorteilhafter Weise ein handelsübliches Spannschloss zu entsprechend günstigen Preisen Verwendung finden, was sich wiederum positiv auf die Herstellungskosten der erfindungsgemäßen Befestigungsvorrichtung auswirkt.

Nicht zuletzt ist für die Befestigung des Spannbandes vermittels eines Spannschlosses am Behälterhalter ein optimaler Kraftfluss bzw. eine sehr gute Kraftableitung der im Spannband vorherrschenden Zugkraft über das Spannschloss in den Behälterhalter und von diesem in den Fahrzeugunterbau gewährleistet. Unerwünschte Spitzen im Kräfteverlauf oder gar Momente, die zu punktuellen Überlastungen oder zu einem Knicken von Bauteilen führen könnten, sind damit vermieden.

Eine weiter bevorzugte Ausführungsform schlägt vor, dass das zwischen dem Behälterhalter und dem Spannbandende zwischengeschaltete Spannschloss zwei, vorzugsweise zylindrische, Spannkörper mit einer senkrecht zur Erstreckungsrichtung des Spannkörpers orientierten Gewindebohrung aufweist, in welche die Spannschraube eingreift, wobei der erste Spannkörper in der Spitze des V-förmigen Behälterhalters um seine Längsachse drehbar angeordnet ist und der zweite Spannkörper von einer Lasche am Spannbandende um seine Längsachse drehbar umfasst ist, wobei die Lasche und der Behälterhalter jeweils eine Ausnehmung aufweisen, durch welche die Spannschraube durch den zweiten Spannkörper hindurch in den ersten Spannkörper hineingeschraubt werden kann. Diese erfindungsgemäße Ausgestaltungsvariante der Verbindung des Spannbandendes vermittels des Spannschlosses mit dem Befestigungshalter stellt durch die beiderseits drehbare Anlenkung der Spannschlossenden am Spannbandende bzw. am Befestigungshalter sicher, dass keinerlei unerwünschte Momente im Kraftfluss vom Spannband zum Behälterhalter auftreten können. Damit ist eine vollständig knickfreie Verbindung realisierbar.

Die dabei ausschließlich zu berücksichtigenden Zugkräfte sind einer numerischen Analyse jederzeit problemlos zugänglich, so dass eine optimale Dimensionierung der erfindungsgemäßen Befestigungsvorrichtung in Abhängigkeit der zu erwartenden Kraftverhältnisse bereits in der Planungsphase am Rechner mit bekannten CAD-Verfahren und/oder Finite-Elemente-Methoden im voraus durchgeführt werden kann. Damit können entsprechend teuere Feldversuche oder gar aufwendige Crashtests entfallen oder zumindest auf ein minimales Maß beschränkt werden. Die sich hier in vorteilhafter Weise ergebenden Kosteneinsparpotentiale sind beachtlich.

Durch die Vorsehung entsprechender Ausnehmungen oder Schlitze in der Spitze des V-förmigen Behälterhalter lassen sich die Spannkörper der Spannschlösser mit möglichst geringem Montageaufwand in den V-förmigen Behälterhalter einhängen, so dass diese bevorzugte Ausführungsvariante aufgrund der einfachen Montierbarkeit nicht nur einer Serienproduktion zugänglich ist, sondern eine besonders kostengünstige Alternative darstellt. Analoges trifft auf die Verbindungsstelle zwischen dem in dieser Ausgestaltungsvariante laschenartigen Spannbandende und dem ihm zugeordneten Spannschlossende zu. Auch hier lässt sich der Spannbolzen problemlose in das laschenartige Spannbandende einhängen. Gleiches gilt hinsichtlich der extrem einfachen Handhabung beim Verbinden der beiden Spannkörper mit der Spannschraube.

In einer weiter bevorzugten Ausführungsform ist das Spannband vermittels eines Spannbügels derart am Behälterhalter befestigt, dass die am Spannband herrschenden Zugkräfte über einen Spannbolzen wiederum als Zugkräfte und weitestgehend ohne Scherkräfte in den Behälterhalter einleitbar sind. Hier ergeben sich wiederum die bereits vorstehend zur Lösung mit dem Spannschloss mit Spannschraube diskutierten Vorteile.

Gemäss einer weiter bevorzugten Variante der erfindungsgemäßen Befestigungsvorrichtung ist vorgesehen, dass der zwischen dem Behälterhalter und dem Spannbandende zwischengeschaltete Spannbügel als Dopppel-T-Bolzen oder als H-Bolzen ausgebildet ist, der zwei vorzugsweise wenigstens halbzylindrische. Spannkörper mit einem senkrecht zur Erstreckungsrichtung der Spannkörper orientierten Verbindungsbolzen aufweist, wobei der erste Spannkörper vermittels einer Ausnehmung in der Spitze des V-förmigen Behälterhalters um dessen Längsachse drehbar einhängbar ist und der zweite Spannkörper von einer Lasche am Spannbandende um dessen Längsachse drehbar umfasst ist, wobei die Lasche eine Ausnehmung aufweist, durch welche der zweite Spannkörper des Spannbügels hindurch einhängbar ist. Auch hier ergeben sich die bereits vorstehend diskutierten Vorteile hinsichtlich leichter Montierbarkeit, kostengünstiger Umsetzung und klarer Dimensionierung der entsprechenden Bauteile-durch diesbezügliche Berechnungen im Vorfeld der Serienproduktion.

Die erfindungsgemäße Befestigungsvorrichtung weist in einer weiter bevorzugten Ausführungsform zwei V-förmige Behälterhalter mit Ausnehmungen zum Durchgriff von Spannschrauben oder Spannbolzen für zugeordnete Spannkörper von Spannschlössern oder Spannbügeln auf, und verfügt entweder über zwei Spannschlösser oder über ein Spannschloss und einen Spannbügel pro Spannband. Damit wird in vorteilhafter Weise sichergestellt, dass der am Unterbau zu befestigende Behälter rund um vermittels Zugkräften am Unterboden fixiert und dort dauerhaft gesichert ist. Ein unerwünschtes Bewegen des Behälters während des Betriebs des Fahrzeugs und insbesondere ein unerwünschtes Losreißen desselben bei einem Unfall oder dergleichen ist ausgeschlossen.

Gemäss einer weiter bevorzugten Ausführungsform stützt sich der dem Behälter abgewandte Schenkel des V-förmigen Behälterhalters gegen parallel zur Fahrzeuglängsachse und damit in bevorzugter Weise senkrecht zur Orientierungsrichtung des Behälterhalters orientierte Verstärkungsrippen ab, die sogenannte "Crashboxen" als Knautschzone bei Heckaufprall bilden. Dabei können die Verstärkungsrippen beiderseits des Behälters jedem Behälterhalter zugeordnet werden. Es ist ebenso denkbar lediglich auf einer Seite derlei Verstärkungsrippen vorzusehen. Vermittels der Verstärkungsrippen können besonders große, schlagartig auftretende Kräfte, wie sie bei Unfällen unvermeidbar sind, mit leicht beherrschbaren geringen Flächenbelastungen über die vergleichsweise große Kontaktfläche der Verstärkungsrippen zum Unterbau noch besser abgeleitet werden, als dies der Fall ist bei einer Verwendung von Behälterhaltern ohne Verstärkungsrippen.

Insbesondere kann auf diese Weise die Dimensionierung dieser Bauteile weiter optimiert werden, so dass diese zur Einsparung von Gewicht und Material so leicht und schlank als möglich ausgelegt werden können. Dabei kann die Abstützung der Behälterhalter gegen die Verstärkungsrippen beispielsweise für eine dauerhafte Fixierung geschraubt, geschweißt, gepunktet, gekrimpt oder anderweitig ausgeführt werden. Analoges gilt für die Befestigung der Verstärkungsrippen am Unterbau.

In einer weiter bevorzugten Ausführungsform der erfindungsgemäßen Befestigungsvorrichtung ist der Spannkörper als zylindrische Hülse ausgebildet. Dies ist eine der kostengünstigsten und am einfachsten herzustellenden Varianten.

Gemäss einer weiter bevorzugten Ausführungsform beträgt der dem Behälter zugewandte Winkel α zwischen dem Unterbau und dem behälterzugewandten Schenkel des V-förmigen Behälterhalters zwischen 110° und 130°, insbesondere 120°. Auf diese Weise wird mit geringem Aufwand vorteilhaft eine optimale Anschmiegung des zu befestigenden Behälters an die vom Unterbau und den Behälterhaltern gebildete Wanne oder Schale ermöglicht. Insbesondere bietet die dabei einem Sechseck angelehnte entstehende Kontur gerade bei zylindrischen Behältern, wie beispielsweise Gasflaschen, einen optimalen Halt derselben.

Die Erfindung wird nachfolgend in Ausführungsbeispielen anhand der Figuren der Zeichnung näher erläutert. Es zeigt:
- Fig. 1: einen schematisch vereinfachten Schnitt durch eine erste beispielhafte Ausführungsform einer erfindungsgemäßen Befestigungsvorrichtung;
- Fig. 2: einen schematisch vereinfachten Schnitt durch eine zweite beispielhafte Ausführungsform einer erfindungsgemäßen Befestigungsvorrichtung;
- Fig. 3: eine dreidimensionale, schematisch vereinfachte Darstellung mit einem Blickwinkel schräg von unten auf eine beispielhafte Ausführungsform einer erfindungsgemäßen Befestigungsvorrichtung;
- Fig. 4: eine weitere dreidimensionale, schematisch vereinfachte Ansicht schräg von unten der in Fig. 3 gezeigten Ausführungsform; und
- Fig. 5: eine schematisch vereinfachte Ansicht von der Seite der in Fig. 3 und 4 gezeigten beispielhaften Ausführungsform.

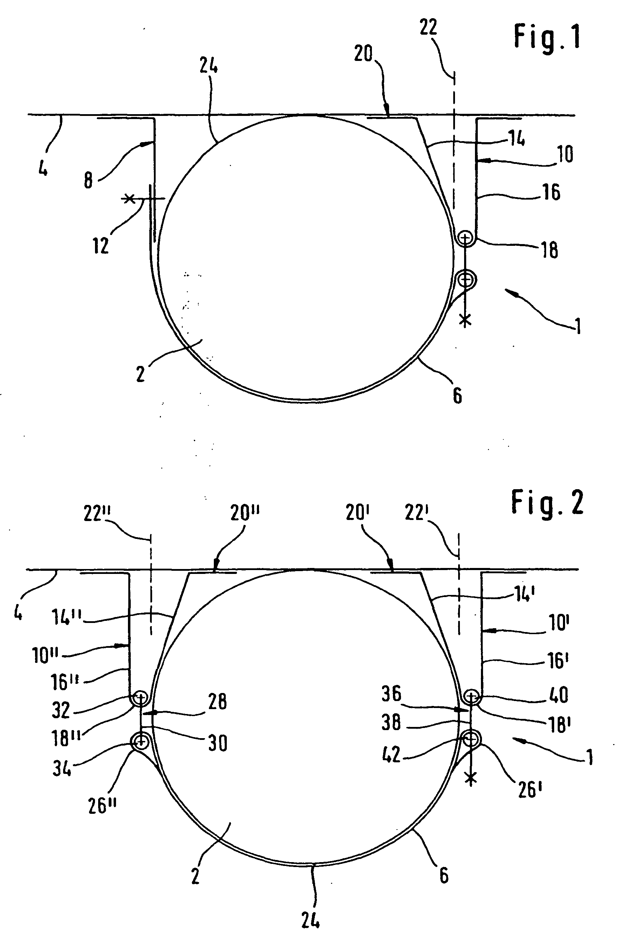

In Fig. 1 ist in einem schematisch vereinfachten Schnitt eine erste beispielhafte Ausführungsform einer erfindungsgemäßen Befestigungsvorrichtung 1 für Behälter 2, wie beispielsweise Hochdruckbehälter, Kraftstofftanks, oder hier eine Gasflasche, oder dergleichen, zu deren Befestigung am Unterbau 4 der nicht näher dargestellten Karosserie eines nicht näher dargestellten Kraftfahrzeuges gezeigt.

Der Behälter 2 ist zumindest teilweise von einem Spannband 6 umfasst und zwischen zwei Behälterhaltern 8 und 10 angeordnet. Der linke Behälterhalter 8 ist in der hier dargestellten Variante als L-förmiger Behälterhalter ausgebildet. An diesem ist das Spannband 6 mit wenigstens einem Befestigungsmittel 12, das beispielsweise als Befestigungsschraube ausgebildet sein kann, montiert. Der in dieser Darstellung rechte Behälterhalter 10 weist einen V-förmigen Querschnitt auf. Dessen beide Schenkel 14 und 16 sind mit nicht näher dargestellten Befestigungsmitteln, wie beispielsweise Schrauben oder einer Schweißverbindung, Punktschweißverbindung oder Krimpverbindung am Unterbau 4 befestigt. Die Spitze 18 des V-förmigen Behälterhalters 10 weist vom Unterbau 4 weg nach unten. Der Befestigungspunkt 20 des dem Behälter 2 zugewandten Schenkels 14 des V-förmigen rechten Behälterhalters 10 mit dem Unterboden 4 liegt innerhalb der senkrecht zum Unterbau 4 projizierten Behälterkontur, wie dies die gestrichelte Linie 22 verdeutlichen soll. Dabei schmiegen sich sowohl Spannband 6 als auch Behälterhalter 10 weitestgehend an den Behälterquerschnitt 24 des Behälters 2 an, wobei diese dabei den Behälterquerschnitt 24 soweit als möglich umfassen.

In Fig. 2 ist eine weitere beispielhafte Ausführungsform einer erfindungsgemäßen Befestigungsvorrichtung 1 für Behälter 2 zu deren Befestigung am Unterbau 4 der Karosserie eines nicht näher dargestellten Kraftfahrzeugs in schematisch vereinfachter Darstellung gezeigt. Bei dieser Ausführungsform ist der Behälter 2 von zwei V-förmigen Behälterhaltern 10' und 10" gehalten. Das Spannband 6 ist in dieser Darstellung mit dessen linkem Ende, das zu einer Lasche 26" ausgebildet ist, vermittels eines Spannbügels 28 mit der Spitze 18'' des linken Behälterhalters 10" verbunden.

Der Spannbügel 28 weist einen Spannbolzen 30 auf. Der Spanhbügel 28 kann dabei als Doppel-T-Bolzen oder als H-Bolzen ausgebildet sein, wobei dieser zwei, vorzugsweise wenigstens halbzylindrische, Spannkörper 32 bzw. 34 aufweist, die entsprechend in der Spitze 18" des V-förmigen Behälterhalter 10" und demgegenüber in der Lasche 26" des Spannbandes 6 eingehängt sind.

Auf der in dieser Darstellung rechten Seite ist das rechte Spannbandende ebenfalls in Form einer Lasche 26' ausgebildet. Das rechte Spannbandende ist vermittels eines Spannschlosses 36 mit der Spitze 18' des rechten Behälterhalters 10' verbunden. Das Spannschloss 36 weist eine Spannschraube 38 auf vermittels derer die im Spannband 6 herrschenden Zugkräfte wiederum als Zugkräfte und weitestgehend ohne Scherkräfte in den Behälterhalter 10' einleitbar sind.

Das Spannschloss 36 verfügt weiterhin über zwei, vorzugsweise zylindrische, Spannkörper 40 und 42 mit einer im wesentlichen senkrecht zur Erstreckungsrichtung des Spannkörpers orientierten - hier nicht näher dargestellten - Gewindebohrung, in welche die Spannschraube 38 eingreift. Der erste Spannkörper 40 ist in der Spitze 18' des V-förmigen Behälterhalters 10' um seine Längsachse drehbar gehalten. Der zweite Spannkörper 42 ist von der Lasche 26 ' am rechten Spannbandende um seine Längsachse drehbar umfasst. Die Laschen 26` und 26" als auch die Spitzen 18' und 18" der Behälterhalter 10' und 10" weisen - in dieser Darstellung nicht näher gezeigte - Ausnehmungen auf, durch welche die Spannschraube 38 bzw. der Spannbolzen 30 hindurch in den jeweiligen Spannkörper geschraubt bzw. mit diesem einstückig verbunden werden kann.

Die Befestigungspunkte 20' bzw. 20" der jeweils links und rechts in der hier gezeigten Darstellung dem Behälter 2 zugewandten Schenkel 14" bzw. 14' liegen am Unterboden 4 innerhalb der senkrecht zum Unterbau 4 projizierten Behälterkontur, was hier wiederum mit den gestrichelten Linien 22" bzw. 22' angedeutet sein soll.

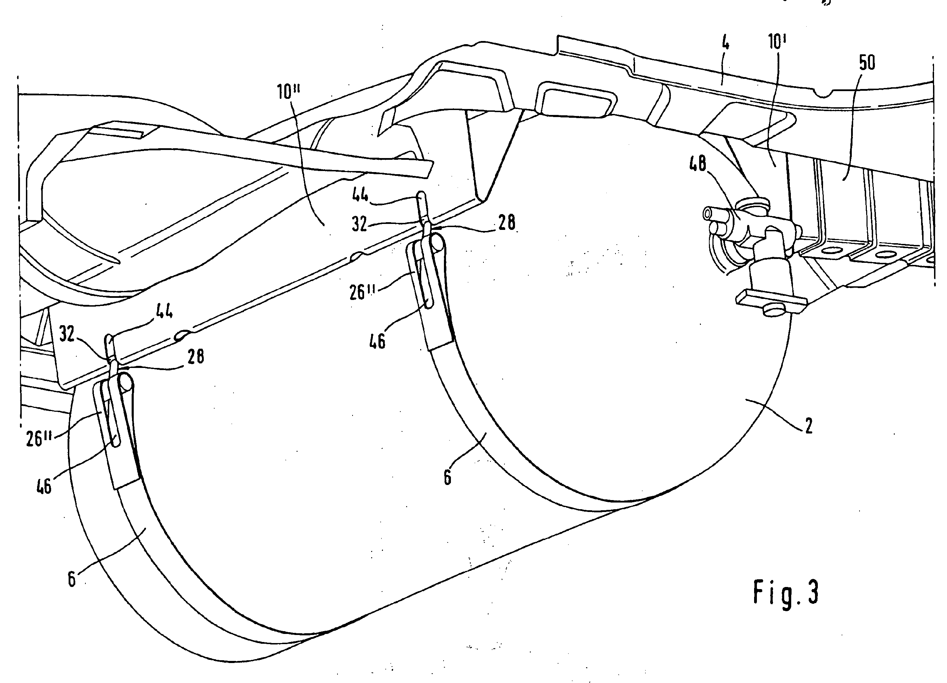

Die in Fig. 3 wiedergegebene dreidimensionale Ansicht einer schematisch vereinfachten Darstellung einer beispielhaften Ausführungsform verdeutlicht die Fixierung des Behälters 2 am teilweise dargestellten Unterbau 4. Im linken Bildabschnitt ist der V-förmige Behälterhalter 10'' gezeigt. Dieser verfügt über Ausnehmungen 44 in welche die Spannkörper 32 des hier als Doppel-T-Bolzen oder als H-Bolzen ausgebildeten Spannbügels 28 eingehängt sind. Die hier linken Spannbandenden der Spannbänder 6 sind als Laschen 26" ausgebildet. Die Laschen 26" weisen Ausnehmungen 46 zum Durchgriff des Spannbügels 28 auf.

Am rechten Bildrand ist ein Fitting 48 des Behälters 2 gezeigt. Ferner ist eine Verstärkungsrippe 50 am Unterbau 4 befestigt zur zusätzlichen Abstützung des rechten Behälterhalters 10'.

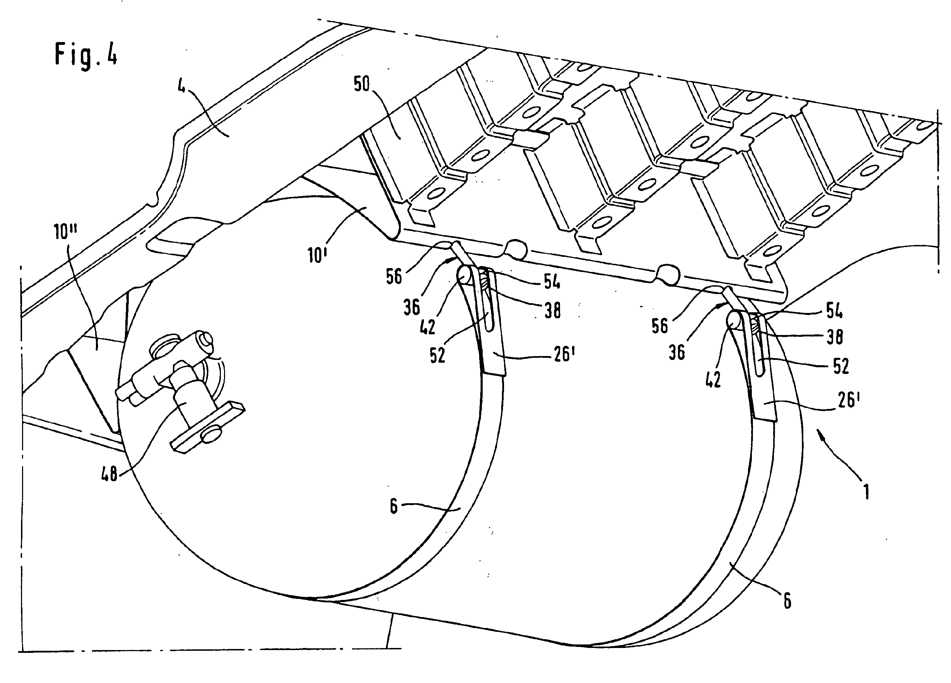

In Fig. 4 ist wiederum in einer schematisch vereinfachten dreidimensionalen Ansicht schräg von unten der am nur teilweise dargestellten Unterbau mit der bereits in Fig. 3 gezeigten beispielhaften Ausführungsform der erfindungsgemäßen Befestigungsvorrichtung 1 fixierte Behälter 2 gezeigt. Die hier wiedergegebene Ansicht konzentriert sich auf die rechte Seite des Behälters 2.

Im linken Bildabschnitt von Fig. 4 ist das Fitting 48 mit den zugehörigen Baugruppen erkennbar. Der Behälter 2 ist mit zwei Spannbändern 6 gegen die Behälterhalter 10' und 10" verspannt. Das rechte Ende der Spannbänder 6 ist jeweils als Lasche 26' ausgebildet. Die Lasche 26' weist Ausnehmungen 52 auf, durch welche die Spannschraube 38 des Spannschlosses 36 hindurchgreifen kann. Der Spannkörper 42, durch welchen die Spannschraube 38 hindurchgreift, ist in der Lasche 26' eingehängt. Der Spannkörper 42 ist in der hier dargestellten Ausführungsvariante als zylindrische Hülse mit einer im wesentlichen senkrecht zur Erstreckungsrichtung des Spannkörpers 42 orientierten Gewindebohrung 54 gezeigt. Die Spannschraube 38 greift durch eine Ausnehmung 56, die in der Spitze des V-förmigen Behälterhalters 10' angeordnet, durch selbigen hindurch in den darin befindlichen Spannkörper 40 hinein.

Der Behälterhalter 10' ist zusätzlich mit dessen vom Behälter 2 abgewandtem Schenkel 16' gegen Verstärkungsrippen 50 abgestützt, die ihrerseits am Unterboden 4 befestigt sind. Die Verstärkungsrippen 50 sind so vorgeformt, dass sie möglichst viel kinetische Energie bei einem Aufprall absorbieren können.

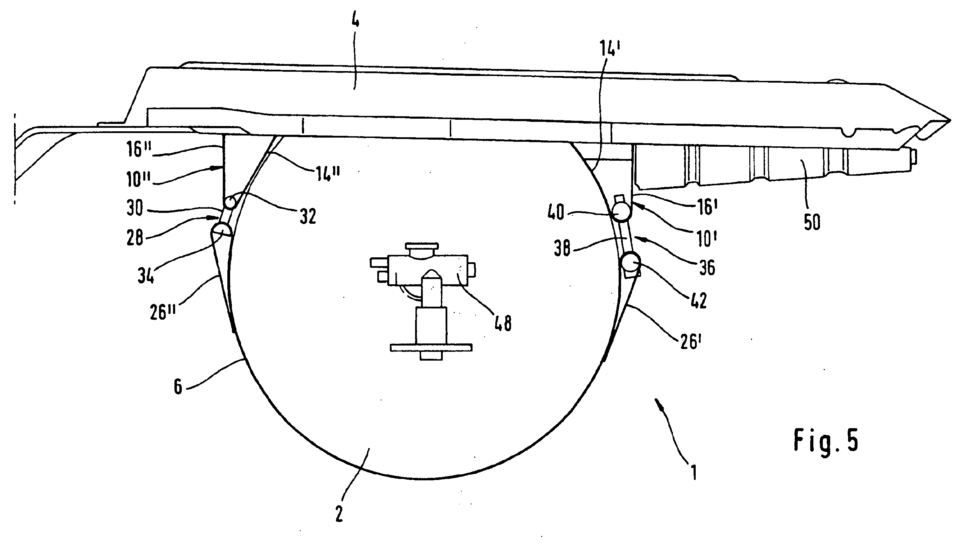

In Fig. 5 ist die in Figuren 3 und 4 veranschaulichte Ausführungsform in einer seitlichen Ansicht wiederum schematisch vereinfacht gezeigt. Aus dieser Darstellung wird sehr gut deutlich, dass der Behälter 2 in einer Art Wanne oder Schale, die vom Unterboden 4 und den beiden Behälterhaltern 10' bzw. 10" ausgebildet wird und deren dem Behälter zugewandte Schenkel 14' bzw. 14" sich an die Kontur bzw. an den Behälterquerschnitt des Behälters 2 anschmiegen, ruht, wobei die Kontur des Behälters 2 weiterhin vom Spannband 6, das links vom Behälter 2 vermittels des Spannbügels 28 mit dem Behälterhalter 10" verspannt ist und welches rechts vom Behälter 2 mit dem Spannschloss 36 am Behälterhalter 10' befestigt ist, weitestmöglich umfasst wird.

Dabei bilden das Spannband 6, der Spannbügel 28, der Behälterhalter 10" der betroffene Abschnitt des Unterbodens 4, der Behälterhalter 10' und das Spannschloss 36 einen den Behälter 2 voll umschlingenden Spannring aus, der sich so gut an dessen Kontur bzw. den Behälterquerschnitt anschmiegt, dass keine nennenswerten Restzwischenräume verbleiben. Damit ist eine optimale Fixierung und dauerhafte Befestigung des Behälters 2 am Unterboden gewährleistet, ohne dass dieser sich aufgrund der beim normalen Betrieb des Fahrzeugs auftretenden Erschütterungen verdrehen könnte oder sich aufgrund irgendwelcher auf ihn von außen einwirkender Kräfte beim Beschleunigen oder Verzögern des Fahrzeugs oder gar bei einem Unfall aus seiner Lage herausbewegen könnte.

In den Figuren 1 bis 5 sind gleich oder gleichwirkende Teile oder Bauelemente mit den gleichen Bezugszeichen versehen, zur Vereinfachung der Darstellung.

Die vorliegende Erfindung schafft damit erstmals eine Befestigungsvorrichtung für Behälter, wie beispielsweise Kraftstofftanks, Gasflaschen, oder dergleichen vor, die vermittels der Befestigungsvorrichtung am Unterbau der Karosserie eines Kraftfahrzeuges montiert werden sollen. Bei dieser Befestigungsvorrichtung weist wenigstens zwei den Behälter zumindest teilweise umfassende Spannbänder auf, und zwei Behälterhalter, an denen die Spannbänder befestigt sind. Die Längsachse des Behälters ist vorzugsweise quer zur Fahrzeuglängsachse orientiert, wobei die Behälterhalter sich beiderseits des Behälters parallel zur Längsachse des Behälters erstrecken, und wobei der Behälter zwischen den Behälterhaltern angeordnet ist. Dabei ist erstmals vorgesehen, dass wenigstens einer der beiden Behälterhalter im Querschnitt V-förmig ausgebildet ist mit vom Unterbau wegweisender V-Spitze. Damit ist wenigstens ein Befestigungspunkt des dem Behälter zugewandten Schenkels des V-förmigen Behälterhalters am Unterboden innerhalb der senkrecht zum Unterbau projizierten Behälterkontur angeordnet, wobei Spannband und Behälterhalter sich weitestgehend an den Behälterquerschnitt anschmiegen und dabei den Behälterquerschnitt soweit als möglich umfassen.

### Bezugszeichenliste

- 1: Befestigungsvorrichtung
- 2: Behälter
- 4: Unterbau
- 6: Spannband
- 8: Behälterhalter
- 10: Behälterhalter
- 10': Behälterhalter
- 10": Behälterhalter
- 12: Befestigungsmittel
- 14: Schenkel
- 16: Schenkel
- 18: Spitze
- 18': Spitze
- 18": Spitze
- 20: Befestigungspunkt
- 22: Linie
- 24: Behälterquerschnitt
- 26': Lasche
- 26": Lasche
- 28: Spannbügel
- 30: Spannbolzen
- 32: Spannkörper
- 34: Spannkörper
- 36: Spannschloss
- 38: Spannschraube
- 40: Spannkörper
- 42: Spannkörper
- 44: Ausnehmung
- 46: Ausnehmung
- 48: Fitting
- 50: Verstärkungsrippe
- 52: Ausnehmung
- 54: Gewindebohrung
- 56: Ausnehmung

## Patentansprüche

1. Befestigungsvorrichtung (1) für Behälter (2), wie beispielsweise Hochdruckbehälter, Kraftstofftanks, Gasflaschen, oder dergleichen, am Unterbau (4) der Karosserie eines Kraftfahrzeuges, mit wenigstens zwei den Behälter (2) zumindest teilweise umfassenden Spannbändern (6), und mit zwei Behälterhaltern (8), an denen die Spannbänder befestigt sind, und wobei der Behälter (2) zwischen den Behälterhaltern (8) angeordnet ist und wobei das Spannband (6, 6', 6") sich weitestgehend an den Behälterquerschnitt (24) anschmiegt und dabei den Behälterquerschnitt (24) soweit als möglich umfasst. **dadurch gekennzeichnet, dass** die Behälterhalter (8) sich beiderseits des Behälters (2) parallel zur Längsachse des Behälters (2) erstrecken und wenigstens einer der beiden Behälterhalter (10, 10', 10") im Querschnitt V-förmig mit vom Unterbau (4) wegweisender Spitze (18, 18', 18") ausgebildet ist, so dass wenigstens ein Befestigungspunkt (20, 20', 20") des dem Behälter (2) zugewandten Schenkels (14, 14', 14") des V-förmigen Behälterhalters (10) am Unterboden (4) innerhalb der senkrecht zum Unterbau (4) projizierten Behälterkontur (22, 22', 22") liegt.

2. Befestigungsvorrichtung (1) nach Anspruch 1, **dadurch gekennzeichnet, dass** das Spannband (6) vermittels eines Spannschlosses (36) derart am Behälterhalter (10, 10') befestigt ist, dass die im Spannband (6) herrschenden Zugkräfte über eine Spannschraube (38) wiederum als Zugkräfte in den Behälterhalter (10, 10') einleitbar sind.

3. Befestigungsvorrichtung (1) nach Anspruch 2, **dadurch gekennzeichnet, dass** das zwischen dem Behälterhalter (10, 10') und dem Spannbandende (26') zwischengeschaltete Spannschloss (36) zwei Spannkörper (40, 42) mit einer senkrecht zur Erstreckungsrichtung des Spannkörpers (40, 42) orientierten Gewindebohrung (54) aufweist, in welche die Spannschraube (38) eingreift, wobei der erste Spannkörper (40) in der Spitze (18, 18') des V-förmigen Behälterhalters (10, 10') um seine Längsachse drehbar angeordnet ist und der zweite Spannkörper (42) von einer Lasche (26') am Spannbandende um seine Längsachse drehbar umfasst ist, wobei die Lasche (26') und der Behälterhalter (10') jeweils eine Ausnehmung (52) aufweisen, durch welche die Spannschraube (38) durch den zweiten Spannkörper (42) hindurch in den ersten Spannkörper (40) hinein geschraubt werden kann.

4. Befestigungsvorrichtung (1) nach einem der Ansprüche 1 bis 3, **dadurch gekennzeichnet, dass** das Spannband (6) vermittels eines Spannbügels (28) derart am Behälterhalter (10") befestigt ist, dass die im Spannband (6) herrschenden Zugkräfte über einen Spannbolzen (30) wiederum als Zugkräfte in den Behälterhalter (10") einleitbar sind.

5. Befestigungsvorrichtung (1) nach Anspruch 4, **dadurch gekennzeichnet, dass** der zwischen dem Behälterhalter (10") und dem Spannbandende (26") zwischengeschaltete Spannbügel (28) als Doppel-T-Bolzen oder als H-Bolzen ausgebildet ist, der zwei, vorzugsweise wenigstens halbzylindrische, Spannkörper (32, 34) mit einem senkrecht zur Erstreckungsrichtung der Spannkörper (32, 34) orientierten Verbindungsbolzen (30) aufweist, wobei der erste Spannkörper (32) vermittels einer Ausnehmung (44) in der Spitze (18") des V-förmigen Behälterhalters (10") um dessen Längsachse drehbar einhängbar ist und der zweite Spannkörper (34) von einer Lasche (26") am Spannbandende um dessen Längsachse drehbar umfasst ist, wobei die Lasche (26") eine Ausnehmung (46) aufweist, durch welche der zweite Spannkörper (34) des Spannbügels hindurch einhängbar ist.

6. Befestigungsvorrichtung (1) nach einem der Ansprüche 1 bis 5, **dadurch gekennzeichnet, dass** die zwei Behälterhalter (10, 10', 10") im Querschnitt V-förmig und mit Ausnehmungen zum Durchgriff von Spannschrauben (38) oder Spannbolzen (30) für zugeordnete Spannkörper (32, 34, 40, 42) von Spannschlössern (36) oder Spannbügeln (28) ausgebildet sind und die Befestigungsvorrichtung (1) entweder zwei Spannschlösser (36) oder ein Spannschloss (36) und einen Spannbügel (28) pro Spannband (6) aufweist.

7. Befestigungsvorrichtung (1) nach einem der Ansprüche 1 bis 6, **dadurch gekennzeichnet, dass** sich der dem Behälter (2) abgewandte Schenkel (16, 16', 16") des V-förmigen Behälterhalters (10, 10' 10") gegen parallel zur Fahrzeuglängsachse orientierte Verstärkungsrippen (50) abstützt.

8. Befestigungsvorrichtung (1) nach einem der Ansprüche 1 bis 7, **dadurch gekennzeichnet, dass** der Spannkörper (32, 34, 40, 42) als zylindrische Hülse (54) ausgebildet ist.

9. Befestigungsvorrichtung (1) nach einem der Ansprüche 1 bis 8, **dadurch gekennzeichnet, dass** der dem Behälter (2) zugewandte Winkel α zwischen dem Unterbau (4) und dem behälterzugewandten Schenkel (14, 14', 14 ") des V-förmigen Behälterhalters (10, 10', 10") zwischen 110° und 130° beträgt.

10. Befestigungsvorrichtung (1) nach Anspruch 9, **dadurch gekennzeichnet, dass** der dem Behälter (2) zugewandte Winkel α zwischen dem Unterbau (4) und dem behälterzugewandten Schenkel (14, 14', 14") des V-förmigen Behälterhalters (10, 10', 10") 120° beträgt.

11. Befestigungsvorrichtung (1) nach einem der vorhergehenden Ansprüche, **dadurch gekennzeichnet, dass** die Längsachse des Behälters (2) quer zur Fahrzeuglängsachse orientiert ist.

12. Befestigungsvorrichtung (1) nach einem der vorhergehenden Ansprüche, **dadurch gekennzeichnet, dass** die zwei Spannkörper (40, 42) zylindrisch ausgebildet sind.

## Claims

1. A fastening apparatus (1) for containers (2) such as highpressure tanks, fuel tanks, gas cylinders or the like, on the underbody (4) of the car body of a motor vehicle, comprising at least two tightening straps (6) which enclose the container (2) at least in part and two container holders (8) to which the tightening straps are fastened, with the container (2) being arranged between the container holders (8) and the tightening strap (6, 6', 6") sitting close to the container cross section (24) as far as possible and enclosing the container cross section (24) as far as possible, **characterized in that** the container holders (8) extend on either side of the container (2) parallel to the longitudinal axis of the container (2), and at least one of the two container holders (10, 10', 10") is arranged to be V-shaped in the cross section with a tip (18, 18', 18") facing away from the underbody (4), so that at least one fastening point (20, 20', 20") of the limb (14, 14', 14") of the V-shaped container holder (10) which faces the container (2) lies on the underbody (4) within the container contour (22, 22', 22") projected perpendicularly to the underbody (4).

2. A fastening apparatus (1) according to claim 1, **characterized in that** the tightening strap (6) being fastened by means of a turnbuckle (36) to the container holder (10, 10') in such a way that the tensile forces prevailing in the tightening strap (6) can be introduced again by way of a tensioning screw (38) as tensile forces into the container holder (10, 10').

3. A fastening apparatus (1) according to claim 2, **characterized in that** the turnbuckle (36) interposed between the container holder (10, 10') and the tightening strap end (26') comprises two tensioning bodies (40, 42) with a threaded borehole (54) oriented perpendicularly to the direction of extension of the tensioning body (40, 42), in which borehole the tensioning screw (38) engages, with the first tensioning body (40) being arranged in the tip (18, 18') of the V-shaped container holder (10, 10') in a manner rotatable about its longitudinal axis, and the second tensioning body (42) is enclosed rotatably about its longitudinal axis by a bracket (26') at the end of the tightening strap, with the bracket (26') and the container holder (10') respectively comprising a recess (52), through which the tensioning screw (38) can be screwed through the second tensioning body (42) into the first tensioning body (40).

4. A fastening apparatus (1) according to one of the claims 1 to 3, **characterized in that** the tensioning strap (6) is fastened by means of a clamping bracket (28) to the container holder (10") in such a way that the tensile forces prevailing in the tensioning strap (6) can be introduced by way of a tensioning bolt (30) as tensile forces again into the container holder (10").

5. A fastening apparatus (1) according to claim 4, **characterized in that** the clamping bracket (28) interposed between the container holder (10") and the tightening strap end (26") is arranged as a double T-bolt or as an H-bolt which comprises two preferably semi-cylindrical tensioning bodies (32, 34) with a connecting pin (30) oriented perpendicularly to the direction of extension of the tensioning bodies (32, 34), with the first tensioning body (32), as a result of a recess (44) in the tip (18") of the V-shaped container holder (10"), being rotatably suspendable about its longitudinal axis and the second tensioning body (34) being rotatably encompassed about its longitudinal axis by a bracket (26") at the end of the tightening strap, with the bracket (26") having a recess (46) by means of which the second tensioning body (34) of the tensioning bracket can be suspended through the same.

6. A fastening apparatus (1) according to one of the claims 1 to 5, **characterized in that** the two container holders (10, 10', 10") are arranged to be V-shaped in their cross section and are provided with recesses for the penetration of tensioning screws (38) or tensioning bolts (30) for associated tensioning bodies (32, 34, 40, 42) of turnbuckles (36) or clamping brackets (28), and the fastening apparatus (1) comprises either two turnbuckles (36) or one turnbuckle (36) and a clamping bracket (28) per tightening strap (6).

7. A fastening apparatus (1) according to one of the claims 1 to 6, **characterized in that** the limb (16, 16', 16") of the V-shaped container holder (10, 10', 10") facing away from the container (2) rests on reinforcing ribs (50) oriented parallel to the longitudinal axis of the vehicle.

8. A fastening apparatus (1) according to one of the claims 1 to 7, **characterized in that** the tensioning body (32, 34, 40, 42) is arranged as a cylindrical sleeve (54).

9. A fastening apparatus (1) according to one of the claims 1 to 8, **characterized in that** the angle α facing the container (2) between the underbody (4) and the limb (14, 14', 14") of the V-shaped container holder (10, 10', 10") which faces the container is between 110° and 130°.

10. A fastening apparatus (1) according to claim 9, **characterized in that** the angle α facing the container (2) between the underbody (4) and the limb (14, 14', 14") of the V-shaped container holder (10, 10', 10") which faces the container is between 120°.

11. A fastening apparatus (1) according to one of the preceding claims, **characterized in that** the longitudinal axis of the container (2) is oriented transversally to the longitudinal axis of the vehicle.

12. A fastening apparatus (1) according to one of the preceding claims, **characterized in that** the two tensioning bodies (40, 42) are arranged cylindrically.

## Revendications

1. Dispositif de fixation (1) pour fixer des réservoirs (2) tels que des réservoirs sous haute pression, réservoirs de carburant, bouteilles de gaz ou similaires sur le bas de caisse (4) de la carrosserie d'un véhicule à moteur, avec au moins deux sangles de serrage (6) entourant au moins partiellement le réservoir (2) et avec deux supports de réservoir (8) auxquels les sangles de serrage sont fixées, dans lequel le réservoir (2) est disposé entre les supports de réservoir (8) et dans lequel la sangle de serrage (6, 6', 6") s'applique le plus étroitement possible sur la section (24) du réservoir et entoure ainsi la section (24) du réservoir autant que possible, **caractérisé en ce que** les supports de réservoir (8) s'étendent de part et d'autre du réservoir (2) parallèlement à l'axe longitudinal du réservoir (2) et au moins un des deux supports de réservoir (10, 10', 10") est en forme de V en section avec une pointe (18, 18', 18") dirigée à l'opposé du bas de caisse (4), de sorte qu'au moins un point de fixation (20, 20', 20") du bras (14, 14', 14") du support de réservoir en forme de V (10) dirigé vers le réservoir (2) se trouve à l'intérieur du contour de réservoir (22, 22', 22") projeté vers le bas de caisse (4).

2. Dispositif de fixation (1) selon la revendication 1, **caractérisé en ce que** la sangle de serrage (6) est fixé au moyen d'un tendeur (36) sur le support de réservoir (10, 10') de telle façon que les forces de traction régnant dans la sangle de serrage (6) puissent être transmises par l'intermédiaire d'une vis de serrage (38) au support de réservoir (10, 10') sous la forme de forces de traction.

3. Dispositif de fixation (1) selon la revendication 2, **caractérisé en ce que** le tendeur (36) intercalé entre le support de réservoir (10, 10') et l'extrémité (26') de la sangle de serrage présente deux éléments de serrage (40, 42) avec un trou fileté (54) orienté perpendiculairement au sens d'extension de l'élément de serrage (40, 42) dans lequel la vis de serrage (38) se met en prise, le premier élément de serrage (40) étant disposé dans la pointe (18, 18') du support de réservoir en forme de V (10, 10') avec possibilité de rotation autour de son axe longitudinal et le deuxième élément de serrage (42) étant entouré par une patte (26') à l'extrémité de la sangle de serrage avec possibilité de rotation autour de son axe longitudinal, la patte (26') et le support de réservoir (10') présentant chacun une ouverture (52) à travers laquelle la vis de serrage (38) peut être vissée à travers le deuxième élément de serrage (42) dans le premier élément de serrage (40).

4. Dispositif de fixation (1) selon l'une des revendications 1 à 3, **caractérisé en ce que** la sangle de serrage (6) est fixée au moyen d'une étrier de tension (28) au support de réservoir (10") de telle façon que les forces de traction régnant dans la sangle de serrage (6) puissent être transmises par l'intermédiaire d'un boulon de tension (30) au support de réservoir (10") sous la forme de forces de traction.

5. Dispositif de fixation (1) selon la revendication 4, **caractérisé en ce que** l'étrier de tension (28) intercalé entre le support de réservoir (10") et l'extrémité (26") de la sangle de traction est conformé comme un boulon en double T ou un boulon en H, qui présente deux éléments de serrage (32, 34), de préférence au moins demi-cylindriques, avec un boulon de liaison (30) orienté perpendiculairement à la direction d'extension des éléments de serrage (32, 34), le premier élément de serrage (32) pouvant être accroché au moyen d'une ouverture (44) dans la pointe (18") du support de réservoir en forme de V (10") avec possibilité de rotation autour de son axe longitudinal et le deuxième élément de serrage (34) étant entouré par une patte (26") à l'extrémité de la sangle de serrage avec possibilité de rotation autour de son axe longitudinal, la patte (26") présentant une ouverture (46) à travers laquelle le deuxième élément de serrage (34) de l'étrier de tension peut être accroché.

6. Dispositif de fixation (1) selon l'une des revendications 1 à 5, **caractérisé en ce que** les deux supports de réservoir (10, 10', 10") sont en forme de V en section et sont munis d'ouvertures pour le passage de vis de serrage (38) ou de boulons de tension (30) pour des éléments de serrage (32, 34, 40, 42) associés de tendeurs (36) ou d'étriers de tension (28) et le dispositif de fixation (1) présente soit deux tendeurs (36), soit un tendeur (36) et un étrier de tension (28) par sangle de serrage (6).

7. Dispositif de fixation (1) selon l'une des revendications 1 à 6, **caractérisé en ce que** le bras (16, 16', 16") du support de réservoir en forme de V (10, 10' 10") opposé au réservoir (2) s'appuie contre des nervures de renfort (50) orientées parallèlement à l'axe longitudinal du véhicule.

8. Dispositif de fixation (1) selon l'une des revendications 1 à 7, **caractérisé en ce que** l'élément de serrage (32, 34, 40, 42) est conformé comme une douille cylindrique (54).

9. Dispositif de fixation (1) selon l'une des revendications 1 à 8, **caractérisé en ce que** l'angle α dirigé vers le réservoir (2) entre le bas de caisse (4) et le bras (14, 14', 14") dirigé vers le réservoir du support de réservoir en forme de V (10, 10', 10") est compris entre 110° et 130°.

10. Dispositif de fixation (1) selon la revendication 9, **caractérisé en ce que** l'angle α dirigé vers le réservoir (2) entre le bas de caisse (4) et le bras (14, 14', 14") dirigé vers le réservoir du support de réservoir en forme de V (10, 10', 10") est de 120°.

11. Dispositif de fixation (1) selon l'une des revendications précédentes, **caractérisé en ce que** l'axe longitudinal du réservoir (2) est orienté perpendiculairement à l'axe longitudinal du véhicule.

12. Dispositif de fixation (1) selon l'une des revendications précédentes, **caractérisé en ce que** les deux élément de serrage (40, 42) sont de forme cylindrique.
